# EUROPÄISCHE PATENTSCHRIFT

(11) **EP 3 908 774 B1**
(45) Veröffentlichungstag und Bekanntmachung des Hinweises auf die Patenterteilung: **17.12.2025**
(21) Anmeldenummer: 20702408.4
(22) Anmeldetag: 10.01.2020
(51) Int. Cl.: F16K 27/10, F16K 3/02, F16K 3/34

(54) **ABSPERRARMATUR**
SHUT-OFF VALVE
ARMATURE DE BLOCAGE

(30) Priorität: 11.01.2019 DE 102019100663; 20.03.2019 DE 202019101602 U
(43) Veröffentlichungstag der Anmeldung: 17.11.2021
(73) Patentinhaber: Wurzer, Volker, 46485 Wesel (DE)
(72) Erfinder: HERBST, Raphael, 31228 Peine (DE); WURZER, Volker, 46485 Wesel (DE)
(74) Vertreter: Schneiders & Behrendt Bochum
(86) Internationale Anmeldenummer: PCT/EP2020/050482
(87) Internationale Veröffentlichungsnummer: WO 2020/144303

(56) Entgegenhaltungen:
- DE-B- 1 045 751
- DE-B- 1 072 854
- DE-T2- 69 509 900
- DE-U- 1 777 150
- GB-A- 1 540 785
- US-A- 2 626 775
- US-A- 3 871 616
- US-A- 4 489 756

## Beschreibung

Die Erfindung betrifft eine Absperrarmatur für Rohre, mit einem Gehäuse, in dem ein Durchgang ausgebildet ist, einer Absperreinheit mit einem Absperrschieber zur Freigabe und Absperrung des Durchganges, wenigstens einem ersten, am Gehäuse angeordneten und mit dem Durchgang verbundenen Anschlussflansch zum Anschluss an ein erstes Rohrende, und wenigstens einem zweiten, am Gehäuse angeordneten und mit dem Durchgang verbundenen Anschlussflansch zum Anschluss an ein zweites Rohrende, wobei die Anschlussflansche über lösbare Schraubverbindungen an dem Gehäuse befestigt sind.

Eine solche Absperrarmatur ist aus EP 3 171 064 A1 bekannt. Die hier beschriebene Absperrarmatur verfügt über einen in einem Gehäuse gebildeten Durchgang, der mit einem Absperrschieber freigegeben und versperrt werden kann. Der Durchgang ist mit zwei integral am Gehäuse ausgebildeten Anschlussflanschen verbunden, welche zur Verbindung der Armatur mit angeflanschten Rohrenden verwendet werden können. Der Aufbau dieser Absperrarmatur macht den Einbau, die Wartung und den Austausch aufwendig und teuer. Bei einer Reparatur muss die Absperrarmatur regelmäßig vollständig mit den Anschlussflanschen aus dem Rohrverbund entfernt werden, um beispielsweise eine verschleißbedingte Erneuerung des Absperrschiebers und der Sitzringe vornehmen zu können, da diese Komponenten im Gehäuse unzugänglich angeordnet sind. Beim Einbau der Absperrarmatur müssen die Anschlussflasche aufwendig mit an den Rohrenden erforderlichen, korrespondierenden Anschlussstellen verbunden werden. Mit der Lösung der Anschlussflansche aus dem Rohrverbund ist zudem beim Wiedereinbau eine aufwändige Abdichtung der Anschlussflansche gegenüber den Rohrenden erforderlich. Außerdem machen die Anschlussflansche das Gehäuse der Absperrarmatur schwer.

Die DE 695 09 900 T2 betrifft eine Ventilbaugruppe, die ein Ventilgehäuse mit einem Einlass, einem Auslass, einem ringförmigen Ventilsitz zwischen dem Einlass und dem Auslass, und ein Ventilverschlusselement umfasst, das schwenkbar innerhalb des Ventilgehäuses mittels zwei Spindeln angebracht ist, wobei zwei Anbringungselemente zum Verbinden der Ventilbaugruppe mit einer benachbarten Komponente vorgesehen sind, die lösbar mit dem Ventilgehäuse verbunden sind. Nachteilig an der hier beschriebenen Ventilbaugruppe ist die vorgesehene Beschichtung des Ventilgehäuse und der Anbringungselemente, was die Möglichkeiten zum Anschluss von Rohrenden an den Anbringungselementen erheblich einschränkt.

Die US 2,626,775 A betrifft eine Absperrarmatur der eingangs genannten Art, wobei die Anschlussflansche hier über lösbare Schraubverbindungen an dem Gehäuse befestigt sind. An der hier beschriebenen Absperrarmatur sind die Anschlussflansche mit in Umfangsrichtung beabstandeten Öffnungen versehen, die klassische Schraubflansche bilden. Ein Nachteil dieser Schraubflansche ist der hierdurch kompliziertere Einbau.

Die DE 17 77 150 U betrifft eine Absperrarmatur der eingangs genannten Art, wobei die Anschlussflansche über Schweißverbindungen an dem Gehäuse befestigt sind. Auch hier bilden die Anschlussflansche klassische Schraubflansche. Neben dem komplizierteren Einbau der Absperrarmatur haben diese Anschlussflansche zudem den Nachteil, dass eine Demontage vom Gehäuse ausgeschlossen ist, sodass eine Wartung und Reparatur der Absperrarmatur wenn überhaupt nur eingeschränkt möglich ist.

Aus GB 1540785 A (aufweisend den Oberbegriff des Anspruchs 1) ist ein Absperrventil bekannt, das aus einem zylindrischen, rohrförmigen Ventilkörper besteht. Die Enden des zylindrischen Ventilkörpers sind mit flachen, kreisförmigen Abschlussplatten versehen, welche durch Schweißnähte mit dem Ventilkörper verbunden sind. Das Ventil ist mit einem Ventilschaft sowie einer Ventilklappe ausgestattet, welche durch einen schlitzförmigen Durchlass in der oberen Abschlussplatte geführt werden. Die Anbindung an ein Rohrsystem erfolgt über die zylindrischen Enden des Ventils, welche mit angeschweißten zylindrischen Naben ausgestattet sind. Nachteilig an der gewählten Verbindungsmethode der Anschlussflansche ist, dass eine Wartung und Reparatur nur mit größerem Aufwand und unter Belastung des Gehäuses der Absperrarmatur möglich ist.

Es ist daher Aufgabe der Erfindung, eine verbesserte, leichtere Absperrarmatur anzugeben, die eine einfache Wartung und Reparatur und einen einfachen Einbau ermöglicht.

Gelöst wird diese Aufgabe durch eine Absperrarmatur mit den Merkmalen des Anspruchs 1. Eine solche verbesserte, leichtere Absperrarmatur ermöglicht eine einfache Wartung und Reparatur und einen einfachen Einbau.

Dadurch, dass die Anschlussflansche Schweißflächen zur schweißbaren Verbindung mit den Rohrenden aufweisen, kann das Gehäuse der Absperrarmatur sehr leicht in einen Rohrverbund zwischen zwei Rohrenden eingebaut werden. Hierzu wird die Absperrarmatur mit den am Gehäuse angeschraubten Anschlussflanschen einfach zwischen die Rohrenden eingesetzt und über die Schweißflächen dicht an die Rohrenden angeschweißt. Das Gehäuse kann auch leicht durch Lösung der Schraubverbindungen aus dem Rohrverbund entfernt werden, ohne dass die Anschlussflansche an den Schweißverbindungen von den Rohrenden getrennt werden müssen. Hierdurch sind die Anschlussflansche für den Wiedereinbau des Gehäuses noch immer optimal im Rohrverbund ausgerichtet, sodass schnell wieder eine hohe Dichtigkeit erreichbar ist. Bei der Wartung verbleiben die Anschlussflansche somit im Rohrverbund, was die Zugänglichkeit der im Gehäuse angeordneten Komponenten für einen Austausch vereinfacht.

Erfindungsgemäß ist vorgesehen, dass der Absperrschieber bei Absperrung des Durchganges von austauschbaren Sitzbuchsen kontaktiert wird. Mit der Anordnung oder Verwendung von austauschbaren Sitzbuchsen können verschleißbedingte Abnutzungen bei dem Kontakt von Absperrschieber und Sitzbuchsen bei der Absperrung des Durchganges insbesondere durch den einfachen Austausch der Sitzbuchsen behoben werden. Damit ist eine fortwährende Dichtigkeit der Absperrarmatur durch einfachen Austausch der Sitzbuchsen erreichbar.

Die Erfindung sieht vor, dass die Anschlussflansche an den in das Gehäuse hineinragenden Sitzbuchsen anliegen. Das Anliegen der Anschlussflansche an den in das Gehäuse hineinragenden Sitzbuchsen sorgt für einen sicheren Halt der Sitzbuchsen im Gehäuse. Bei Entfernung des Gehäuses von den Anschlussflanschen sind die Sitzbuchsen zudem für den Austausch einfacher zugänglich.

Die Anschlussflansche werden erfindungsgemäß über durch das Gehäuse verlaufende Schraubbolzen an dem Gehäuse befestigt sind, wobei mit der Verschraubung der Anschlussflansche an dem Gehäuse die an den Anschlussflanschen anliegenden Sitzbuchsen in dem Gehäuse fixiert und festgelegt werden. Hierdurch wird eine verbesserte Absperrarmatur ermöglicht, die eine einfache Wartung und Reparatur und einen einfachen Einbau bietet.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass der Durchgang gerade durch das Gehäuse verläuft. Mit einem geraden Durchgang wird Verschleiß, der bei nicht geradem Durchgang z.B. durch Kavitation auftreten kann, vermieden.

Besonders bevorzugt ist eine Ausführungsform, die vorsieht, dass die Anschlussflansche an gegenüberliegenden Seiten des Gehäuses angeordnet sind. Mit der Anordnung der Anschlussflansche an gegenüberliegenden Seiten ist eine einfache Ausrichtung des Gehäuses zwischen den Anschlussflanschen möglich. Außerdem wird durch die gegenüberliegend angeordneten Anschlussflansche der Einbau der Armatur vereinfacht.

Besonders vorteilhaft ist eine Ausführungsform, die vorsieht, dass die Sitzbuchsen jeweils Dichtungsanordnungen zur Abdichtung gegenüber den Anschlussflanschen und dem Gehäuse aufweisen. Mit den Dichtungsanordnungen an den Sitzbuchsen werden bei Erneuerung der Sitzbuchsen gleich die Dichtungsanordnungen erneuert, sodass nach Austausch der Sitzbuchsen sehr einfach eine hervorragende Dichtigkeit der Absperrarmatur erreichbar ist.

Eine vorteilhafte Ausführung der Erfindung sieht vor, dass die Anschlussflansche integral an den in das Gehäuse hineinragenden Sitzbuchsen angeformt sind. Auf diese Weise können verschlissene Sitzbuchsen nach dem Abtrennen der angeschweißten Anschlussflansche von den Rohrenden direkt zusammen mit den Anschlussflanschen gewechselt werden. Die Anschlussflansche bilden in diesem Fall mit den Sitzbuchsen ein Verschleißteil, das beim erneuten Einbau der Absperrarmatur ausgewechselt bzw. erneuert wird.

Eine vorteilhafte Ausgestaltung sieht vor, dass die Sitzbuchsen den Durchgang im Gehäuse auskleiden. Mit der Auskleidung des Durchganges durch die Sitzbuchsen kann durch Kavitation bedingter Verschleiß an den Sitzbuchsen einfach durch den Austausch der Sitzbuchsen eventuell zusammen mit den Anschlussflanschen behoben werden. Die Auskleidung des Durchgangs mit den Sitzbuchsen verhindert, dass an dem Gehäuse selbst Kavitation entsteht. Damit wird ein Verschleiß am Gehäuse durch die Auskleidung mit den Sitzbuchsen wirksam verhindert.

Gemäß einer bevorzugten Ausgestaltung der Erfindung ist vorgesehen, dass der Absperrschieber austauschbar ist. Über den Austausch des Absperrschiebers können verschleißbedingte Abnutzungen, welche die Dichtigkeit der Absperrarmatur beeinträchtigen, einfach behoben werden.

Besonders vorteilhaft ist eine Ausführungsform, die vorsieht, dass der Absperrschieber eine Durchgangsöffnung aufweist, die über den Austausch des Absperrschiebers geometrisch variierbar ist. Mit der geometrischen Variation der Durchgangsöffnung des Absperrschiebers kann die Absperrarmatur als Absperrventil, als Regelventil oder auch zur Drosselung verwendet werden.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen:
- Figur 1: Absperrarmatur,
- Figur 2: Schnittansicht durch die Absperrarmatur,
- Figur 3: Schnittansicht durch Sitzbuchse,
- Figur 4: Draufsicht auf die Sitzbuchse und
- Figur 5: Schnittansicht durch weitere Absperrarmatur, die nicht Teil der Erfindung ist, und
- Figur 6, 6a: Draufsichten auf Absperrschiebervarianten.

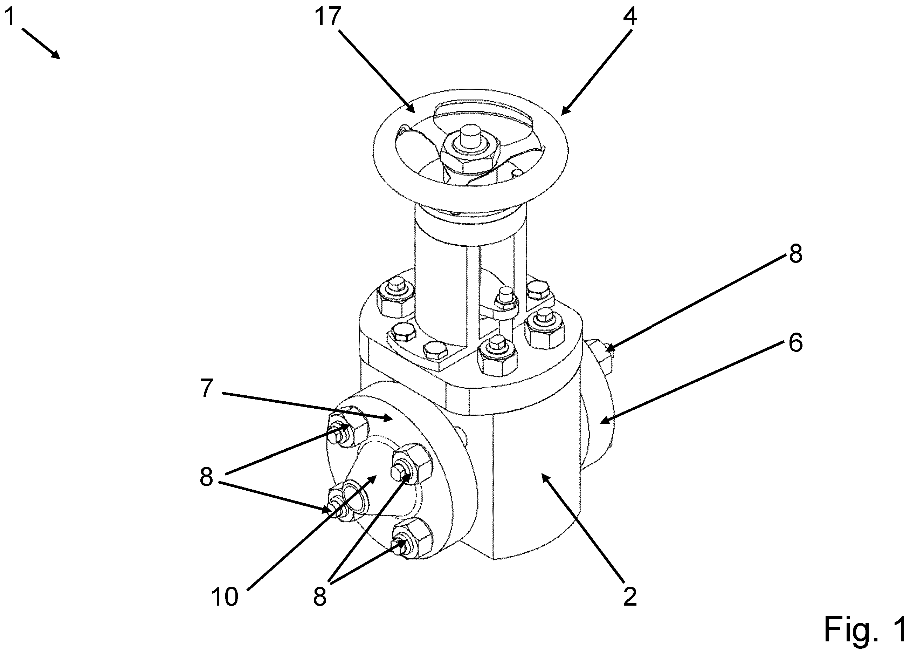

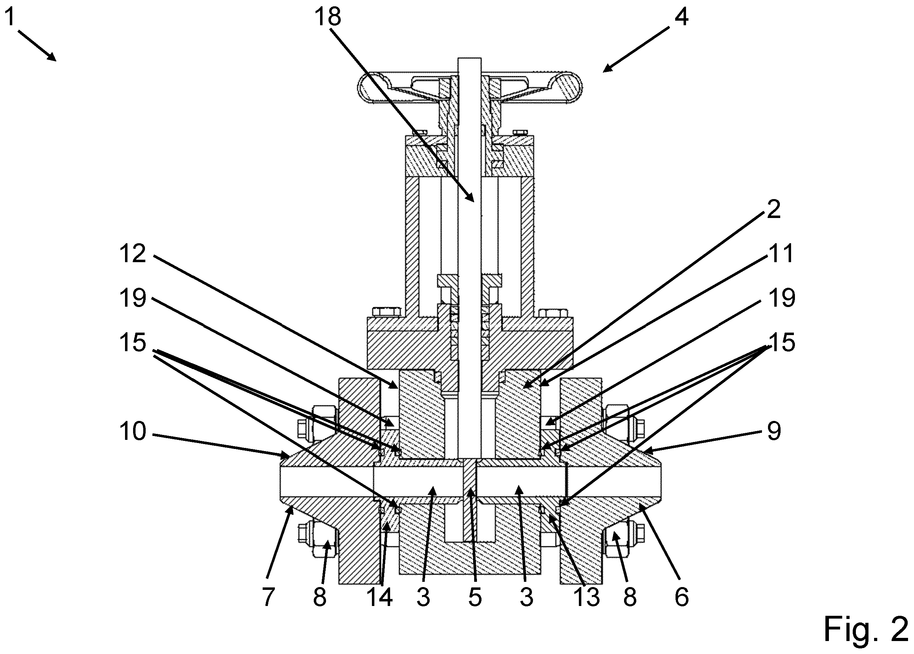

In der Figur 1 mit dem Bezugszeichen 1 bezeichnet ist eine erfindungsgemäße Absperrarmatur dargestellt. Die Absperrarmatur 1 verfügt über ein Gehäuse 2, in dem ein gerader Durchgang 3 (Fig. 2) ausgebildet ist. Dieser Durchgang 3 (Fig. 2) kann über einen Absperrschieber 5 (Fig. 2) freigegeben und abgesperrt werden, indem eine Absperreinheit 4 betätigt wird. Hierzu umfasst die Absperreinheit 4 ein Handrad 17, das eine Spindel 18 (Fig. 2) betätigt, mit welcher der Absperrschieber 5 (Fig. 2) im Durchgang 3 (Fig. 2) verlagerbar ist. An gegenüberliegenden Seiten 11, 12 (Fig. 2) des Gehäuses 2 sind zwei Anschlussflansche 6, 7 angeordnet, die mit dem Durchgang 3 (Fig. 2) verbunden sind. Ein erster Anschlussflansch 6 dient zum Anschluss an ein erstes Rohrende, während ein zweiter Anschlussflansch 7 zum Anschluss an ein zweites Rohrende dient. Die Anschlussflansche 6, 7 sind über Schraubverbindungen 8 an dem Gehäuse 2 befestigt. Hierdurch lassen sich die Anschlussflansche 6, 7 einfach für Wartungsarbeiten von dem Gehäuse 2 lösen, ohne dass die Anschlussflansche 6, 7 von den Schweißverbindungen an den Rohrenden abgetrennt werden müssen. Hierdurch sind für den Wiedereinbau des Gehäuses 2 die Anschlussflansche 6, 7 immer noch optimal im Rohrverbund ausgerichtet, sodass schnell wieder eine gute Dichtigkeit erreichbar ist. Die Anschlussflansche 6, 7 verfügen über Schweißflächen 9, 10, die zur Herstellung einer Schweißverbindung mit zu verbindenden Rohrenden (nicht dargestellt) dienen. Damit kann die Absperrarmatur 1 über die Anschlussflansche 6, 7 einfach an einen Rohrverbund angeschlossen werden. Hierzu wird die Absperrarmatur 1 mit den am Gehäuse 2 angeschraubten Anschlussflanschen 6, 7 direkt zwischen die Rohrenden eingesetzt und über die Schweißflächen 9, 10 dicht an die Rohrenden angeschweißt.

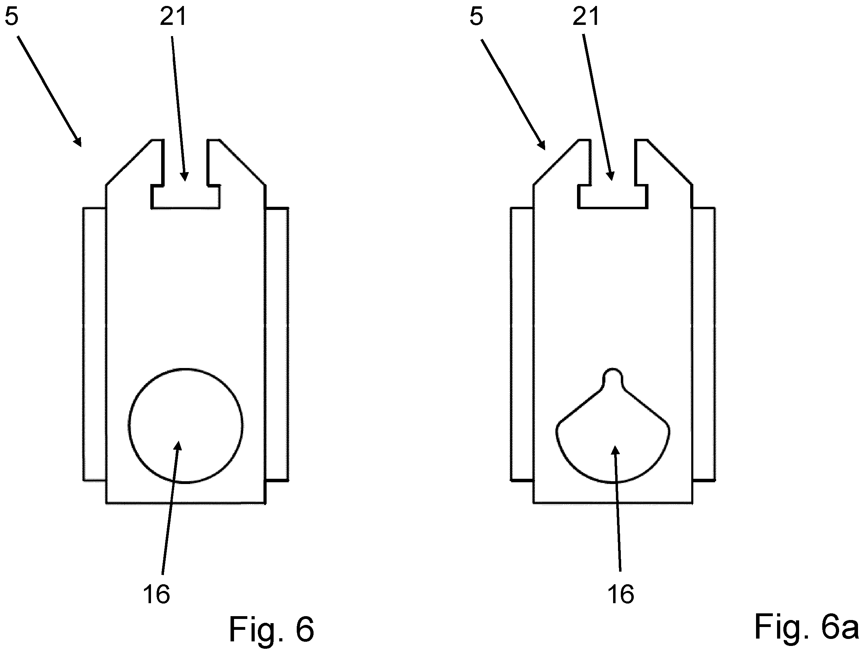

Die Figur 2 zeigt eine Schnittansicht durch die Absperrarmatur gemäß Figur 1. In dieser Darstellung ist der gerade im Gehäuse 2 ausgebildete Durchgang 3 zwischen den beiden an den gegenüberliegenden Seiten 11, 12 angeordneten Anschlussflanschen 6, 7 zu erkennen. Die Anschlussflansche 6, 7 sind über durch das Gehäuse 2 verlaufende Schraubbolzen 19 an dem Gehäuse 2 befestigt. Die Schraubverbindungen 8 sind für Wartungsarbeiten lösbar, sodass die Anschlussflansche 6, 7 für Wartungsarbeiten von dem Gehäuse 2 getrennt werden können. Bei der Wartung verbleiben die Anschlussflansche 6, 7 somit im Rohrverbund, was die Zugänglichkeit der im Gehäuse 2 angeordneten Komponenten 5, 13, 14 für einen Austausch vereinfacht. Die Anschlussflansche 6, 7 liegen an Sitzbuchsen 13, 14 an, welche so weit in das Gehäuse 2 hineinragenden, dass sie bei Absperrung des Durchganges 3 durch den Absperrschieber 5 diesen, wie in Figur 2 gezeigt, kontaktieren. Mit dem Kontakt der Sitzbuchsen 13, 14 und des Absperrschiebers 5 kann eine dichte Absperrung der Rohrleitungsverbindung in dem Durchgang 3 realisiert werden. Bei Verschleiß der Sitzbuchsen 13, 14 können diese sehr einfach ausgetauscht werden. Dadurch, dass die Sitzbuchsen 13, 14 in das Gehäuse 2 hineinragen und hierbei den Durchgang 3 im Gehäuse 2 auskleiden, treten verschleißbedingte Abnutzungen lediglich an den Sitzbuchsen 13, 14 und nicht an dem Gehäuse 2 selbst auf. Der Verschleiß an der Absperrarmatur 1 kann somit durch den Wechsel der Sitzbuchsen 13, 14 behoben werden. Die Sitzbuchsen 13, 14 verfügen über Dichtungsanordnungen 15, welche eine Abdichtung gegenüber den Anschlussflanschen 6, 7 und gegenüber dem Gehäuse 2 bieten. Mit Austausch der Sitzbuchsen 13, 14 werden die Dichtungsanordnungen 15 ebenfalls erneuert, sodass eine hohe Dichtigkeit der Absperrarmatur 1 auch nach Reparaturen gewährleistet ist. Entsprechend der Erfindung werden mit der Verschraubung der Anschlussflansche 6, 7 an dem Gehäuse 2 die an den Anschlussflanschen 6, 7 anliegenden Sitzbuchsen 13, 14 in dem Gehäuse 2 fixiert und erhalten somit eine optimale Festlegung. Bei dem Absperrschieber 5 handelt es sich um ein von der Spindel 18 der Absperreinheit 4 separates Bauteil, sodass dieses bei Wartungsarbeiten ebenfalls einfach ausgetauscht werden kann. Somit lässt sich ein Verschleiß an dem Absperrschieber 5 ebenfalls leicht beheben. Mit dem Austausch des Absperrschiebers 5 kann auch die im Absperrschieber 5 gebildete Durchgangsöffnung 16 (Fig. 6, 6a) geometrisch variiert werden. In den Figuren 6 und 6a sind hierzu unterschiedliche geometrische Ausgestaltungen der Durchlassöffnungen 16 (Fig. 6, 6a) gezeigt. Die in Fig. 6 gezeigte Durchlassöffnung eignet sich insbesondere zur wahlweisen vollständigen Freigabe und Absperrung des Durchgangs 3. Mit der in Fig. 6a gezeigten Geometrie der Durchlassöffnung ist demgegenüber eine Durchflussregelung möglich, da der je nach Stellung des Absperrschiebers freigelassene Querschnitt der Durchlassöffnung in Bewegungsrichtung des Absperrschiebers mehr oder weniger linear variiert.

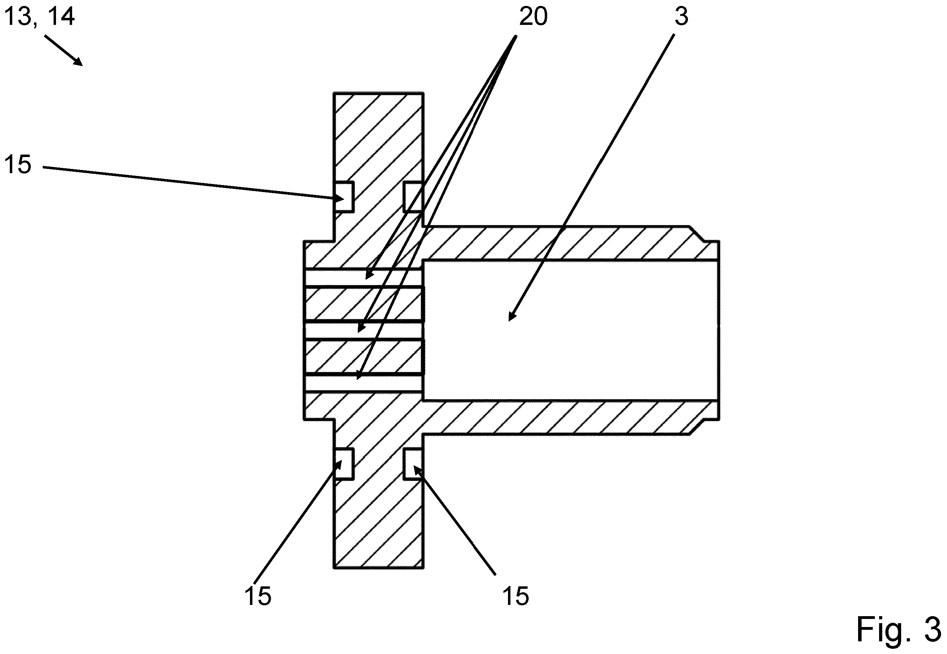

Die Figur 3 zeigt eine Schnittansicht durch eine Sitzbuchse 13, 14, die alternativ zu den in Figur 2 gezeigten Sitzbuchsen 13, 14 verwendet werden kann. Diese Sitzbuchse 13, 14 weist einen auf mehrere kleine Durchlassöffnungen 20 reduzierten Durchgang 3 auf. Mit einem so reduzierten Durchgang 3 kann eine Drosselung über die alternativ einsetzbare Sitzbuchse 13, 14 erreicht werden.

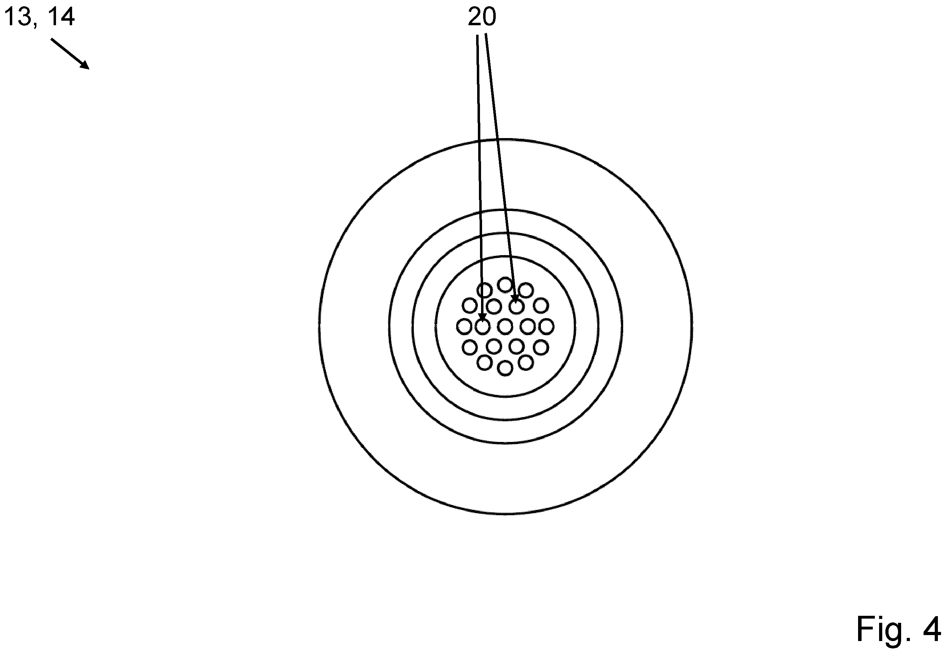

Die Figur 4 zeigt eine Draufsicht auf die Sitzbuchse 13, 14 gemäß Figur 3. In dieser Darstellung ist gut zu erkennen, dass die Durchlassöffnungen 20 im Durchgang 3 (Fig. 3) gleichmäßig verteilt sind, sodass eine gleichmäßige, gedrosselte Strömung bei Freigabe durch den Absperrschieber 5 (Fig. 2) in dem Durchgang 3 (Fig. 3) erreichbar ist.

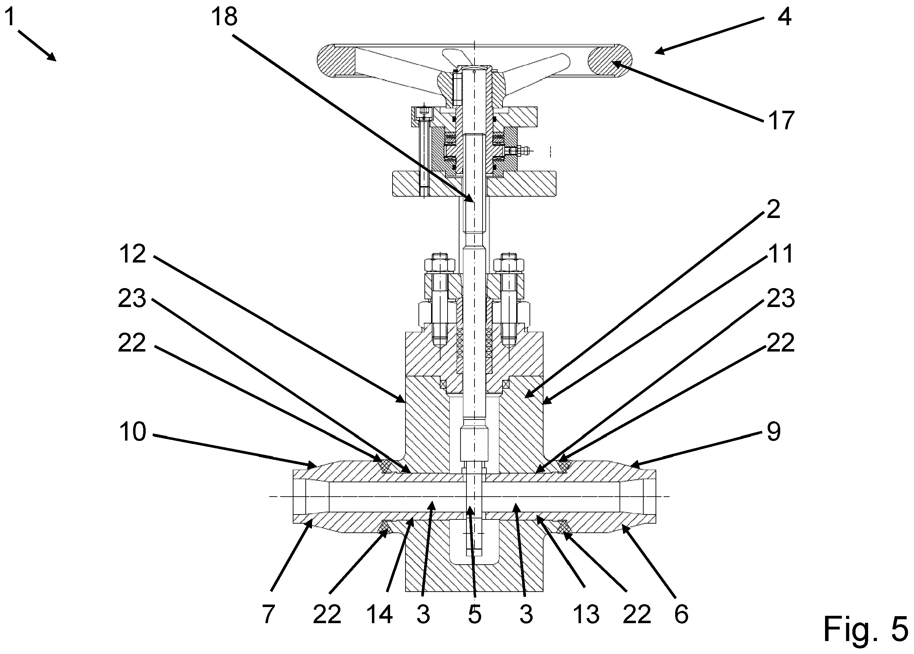

In der Figur 5 mit dem Bezugszeichen 1 bezeichnet ist eine weitere Absperrarmatur in einer Schnittdarstellung, die nicht Teil der Erfindung ist. Die Absperrarmatur 1 verfügt ebenfalls über ein Gehäuse 2, in dem ein gerader Durchgang 3 ausgebildet ist. Dieser Durchgang 3 kann über einen Absperrschieber 5 freigegeben und abgesperrt werden, indem eine Absperreinheit 4 betätigt wird. Hierzu umfasst die Absperreinheit 4 auch ein Handrad 17, das eine Spindel 18 betätigt, mit welcher der Absperrschieber 5 im Durchgang 3 verlagerbar ist. An gegenüberliegenden Seiten 11, 12 des Gehäuses 2 sind zwei Anschlussflansche 6, 7 angeordnet, die mit dem Durchgang 3 verbunden sind. Ein erster Anschlussflansch 6 dient zum Anschluss an ein erstes Rohrende, während ein zweiter Anschlussflansch 7 zum Anschluss an ein zweites Rohrende (z.B. durch Verschweißen) dient. Die Anschlussflansche 6, 7 sind in dem hier gezeigten Ausführungsbeispiel über Schweißverbindungen 22 an dem Gehäuse 2 befestigt. Hierdurch lassen sich die Anschlussflansche 6, 7 einfach mit dem Gehäuse verbinden. Die Anschlussflansche 6, 7 verfügen über Schweißflächen 9, 10, die zur Herstellung einer Schweißverbindung mit zu verbindenden Rohrenden (nicht dargestellt) dienen. Damit kann auch diese Absperrarmatur 1 über die Anschlussflansche 6, 7 einfach an einen Rohrverbund angeschlossen werden. Hierzu wird die Absperrarmatur 1 mit den am Gehäuse 2 angeschweißten Anschlussflanschen 6, 7 direkt zwischen die Rohrenden eingesetzt und über die Schweißflächen 9, 10 dicht an die Rohrenden angeschweißt. Die Anschlussflansche 6, 7 sind in diesem Ausführungsbeispiel vorteilhalfterweise integral an Sitzbuchsen 13, 14 angeformt, welche so weit in das Gehäuse 2 hineinragen, dass sie bei Absperrung des Durchganges 3 durch den Absperrschieber 5 diesen, wie in Figur 5 gezeigt, kontaktieren. Mit dem Kontakt der Sitzbuchsen 13, 14 und des Absperrschiebers 5 kann eine dichte Absperrung der Rohrleitungsverbindung in dem Durchgang 3 realisiert werden. Bei Verschleiß der Sitzbuchsen 13, 14 können diese ausgetauscht werden. Dadurch, dass die Sitzbuchsen 13, 14 in das Gehäuse 2 hineinragen und hierbei den Durchgang 3 im Gehäuse 2 auskleiden, treten verschleißbedingte Abnutzungen lediglich an den Sitzbuchsen 13, 14 und nicht an dem Gehäuse 2 selbst auf. Der Verschleiß an der Absperrarmatur 1 kann somit durch den Wechsel der Sitzbuchsen 13, 14 behoben werden. Mit Austausch der Sitzbuchsen 13, 14 werden bei der hier gezeigten Ausführung die Anschlussflansche 6, 7 ebenfalls erneuert, sodass eine hohe Dichtigkeit der Absperrarmatur 1 auch nach dem erneuten Einbau in einen Rohrverbund gewährleistet ist. Mit der Verschweißung der Anschlussflansche 6, 7 an dem Gehäuse 2 werden die an den Anschlussflanschen 6, 7 befestigten Sitzbuchsen 13, 14 in dem Gehäuse 2 fixiert und erhalten somit eine stabile Festlegung. Um die Sitzbuchsen 13, 14 mit den Anschlussflanschen 6, 7 in dem Gehäuse 2 optimal positioniert festzulegen, verfügt das Gehäuse 2 über Sitzbuchsenaufnahmen 23, welche die Sitzbuchsen 13, 14 zur Bildung der Schweißverbindungen 22 zwischen den Anschlussflanschen 6, 7 und dem Gehäuse 2 festlegen. Bei dem Absperrschieber 5 handelt es sich um ein von der Spindel 18 der Absperreinheit 4 separates Bauteil, sodass dieses bei Wartungsarbeiten ebenfalls einfach ausgetauscht werden kann. Somit lässt sich ein Verschleiß an dem Absperrschieber 5 ebenfalls leicht beheben. Mit dem Austausch des Absperrschiebers 5 kann auch die im Absperrschieber 5 gebildete Durchgangsöffnung 16 (Fig. 6, 6a) geometrisch variiert werden. In den Figuren 6 und 6a sind hierzu unterschiedliche geometrische Ausgestaltungen der Durchlassöffnungen 16 (Fig. 6, 6a) gezeigt. Die in Fig. 6 gezeigte Durchlassöffnung eignet sich insbesondere zur wahlweisen vollständigen Freigabe und Absperrung des Durchgangs 3. Mit der in Fig. 6a gezeigten Geometrie der Durchlassöffnung ist demgegenüber eine Durchflussregelung möglich, da der je nach Stellung des Absperrschiebers freigelassene Querschnitt der Durchlassöffnung in Bewegungsrichtung des Absperrschiebers mehr oder weniger linear variiert.

Die in Figur 6 und 6a gezeigte Absperrschieber 5 verfügen über eine Befestigungsgeometrie 21, welche in den Figuren gut zu erkennen ist. Mit dieser Befestigungsgeometrie 21 können die Absperrschieber 5 beim Austausch einfach an der Spindel 18 (Fig. 2, 5) befestigt werden.

### Bezugszeichenliste

- 1: Absperrarmatur
- 2: Gehäuse
- 3: Durchgang
- 4: Absperreinheit
- 5: Absperrschieber
- 6: Erster Anschlussflansch
- 7: Zweiter Anschlussflansch
- 8: Schraubverbindungen
- 9: Erste Schweißfläche
- 10: Zweite Schweißfläche
- 11: Erste Seite
- 12: Zweite Seite
- 13: Erste Sitzbuchse
- 14: Zweite Sitzbuchse
- 15: Dichtungsanordnungen
- 16: Durchgangsöffnung
- 17: Handrad
- 18: Spindel
- 19: Schraubbolzen
- 20: Durchlassöffnungen
- 21: Befestigungsgeometrie
- 22: Schweißverbindung
- 23: Sitzbuchsenaufnahme

## Patentansprüche

1. Absperrarmatur (1) für Rohre, mit
- einem Gehäuse (2), in dem ein Durchgang (3) ausgebildet ist,
- einer Absperreinheit (4) mit einem Absperrschieber (5) zur Freigabe und Absperrung des Durchganges (3),
- wenigstens einem ersten, am Gehäuse (2) angeordneten und mit dem Durchgang (3) verbundenen Anschlussflansch (6) zum Anschluss an ein erstes Rohrende, und
- wenigstens einem zweiten, am Gehäuse (2) angeordneten und mit dem Durchgang (3) verbundenen Anschlussflansch (7) zum Anschluss an ein zweites Rohrende, wobei die Anschlussflansche (6, 7) über lösbare Schraubverbindungen (8) an dem Gehäuse (2) befestigt sind und die Anschlussflansche (6, 7) Schweißflächen (9, 10) zur schweißbaren Verbindung mit den Rohrenden aufweisen, wobei der Absperrschieber (5) bei Absperrung des Durchganges (3) von austauschbaren Sitzbuchsen (13, 14) kontaktiert wird,
**dadurch gekennzeichnet, dass**:
die Anschlussflansche (6, 7) an den in das Gehäuse (2) hineinragenden Sitzbuchsen (13, 14) anliegen, und
dass die Anschlussflansche (6, 7) über durch das Gehäuse (2) verlaufende Schraubbolzen (19) an dem Gehäuse (2) befestigt sind, wobei mit der Verschraubung der Anschlussflansche (6, 7) an dem Gehäuse (2) die an den Anschlussflanschen (6, 7) anliegenden Sitzbuchsen (13, 14) in dem Gehäuse (2) fixiert und optimal festgelegt werden.

2. Absperrarmatur (1) nach einem der vorhergehenden Ansprüche, **dadurch gekennzeichnet, dass** der Durchgang (3) gerade durch das Gehäuse (2) verläuft.

3. Absperrarmatur (1) nach einem der vorhergehenden Ansprüche, **dadurch gekennzeichnet, dass** die Anschlussflansche (6, 7) an gegenüberliegenden Seiten (11, 12) des Gehäuses (2) angeordnet sind.

4. Absperrarmatur (1) nach einem der vorhergehenden Ansprüche, **dadurch gekennzeichnet, dass** die Sitzbuchsen (13, 14) jeweils Dichtungsanordnungen (15) zur Abdichtung gegenüber den Anschlussflanschen (6, 7) und dem Gehäuse (2) aufweisen.

5. Absperrarmatur (1) nach einem der vorhergehenden Ansprüche, **dadurch gekennzeichnet, dass** die Anschlussflansche (6, 7) integral an den in das Gehäuse (2) hineinragenden Sitzbuchsen (13, 14) angeformt sind.

6. Absperrarmatur (1) nach einem der vorhergehenden Ansprüche, **dadurch gekennzeichnet, dass** die Sitzbuchsen (13, 14) den Durchgang (3) im Gehäuse (2) auskleiden.

7. Absperrarmatur (1) nach einem der vorhergehenden Ansprüche, **dadurch gekennzeichnet, dass** der Absperrschieber (5) austauschbar ist.

8. Absperrarmatur (1) nach Anspruch 7, **dadurch gekennzeichnet, dass** der Absperrschieber (5) eine Durchgangsöffnung (16) aufweist, die über den Austausch des Absperrschiebers (5) geometrisch variierbar ist.

## Claims

1. Shut-off valve (1) for pipes, comprising
- a housing (2) in which a passage (3) is formed,
- a shut-off unit (4) comprising a slide valve (5) for opening and shutting off the passage (3),
- at least one first connection flange (6) which is arranged on the housing (2) and connected to the passage (3), for connection to a first pipe end, and
- at least one second connection flange (7) which is arranged on the housing (2) and connected to the passage (3) for connection to a second pipe end, wherein the connection flanges (6, 7) are fastened to the housing (2) by means of releasable screw connections (8) and the connection flanges (6, 7) comprise weld surfaces (9, 10) for weldable connection to the pipe ends, wherein the slide valve (5) is contacted by replaceable seat bushings (13, 14) when shutting off the passage (3) **characterized in that**
the connection flanges (6, 7) rest on the seat bushings (13, 14) that protrude into the housing (2), and that the connecting flanges (6, 7) are fixed to the housing via screw bolts (19) running through the housing, wherein the seat bushings (13, 14) abutting against the connecting flanges (6, 7) are fixed and optimally mounted in the housing, when the connection flanges (6, 7) are screwed to the housing.

2. Shut-off valve (1) according to any the preceding claims, **characterized in that** the passage (3) extends straight through the housing (2).

3. Shut-off valve (1) according to any of the preceding claims, **characterized in that** the connection flanges (6, 7) are arranged on opposite sides (11, 12) of the housing (2).

4. Shut-off valve (1) according to any of the preceding claims, **characterized in that** the seat bushings (13, 14) each comprise sealing arrangements (15) for sealing with respect to the connection flanges (6, 7) and the housing (2).

5. Shut-off valve (1) according to any of the preceding claims, **characterized in that** the connection flanges (6, 7) are formed integrally on the seat bushings (13, 14) that protrude into the housing (2).

6. Shut-off valve (1) according to any of the preceding claims, **characterized in that** the seat bushings (13, 14) line the passage (3) in the housing (2).

7. Shut-off valve (1) according to any of the preceding claims, **characterized in that** the slide valve (5) is replaceable.

8. Shut-off valve (1) according to claim 7, **characterized in that** the slide valve (5) comprises a passage opening (16), the geometry of which can be varied by replacing the slide valve (5).

## Revendications

1. Robinet d'arrêt (1) pour tuyaux, avec
- un boîtier (2) dans lequel est formé un passage (3),
- une unité d'arrêt (4) avec un tiroir d'arrêt (5) pour libérer et fermer le passage (3),
- au moins une première bride de raccordement (6) disposée sur le boîtier (2) et reliée au passage (3) pour le raccordement à une première extrémité de tuyau, et
- au moins une deuxième bride de raccordement (7) disposée sur le boîtier (2) et reliée au passage (3) pour le raccordement à une deuxième extrémité de tuyau, dans lequel les brides de raccordement (6, 7) étant fixées au boîtier (2) par des raccords vissés amovibles (8) et les brides de raccordement (6, 7) comportant des surfaces de soudage (9, 10) pour la liaison soudable avec les extrémités de tuyau, dans lequel le tiroir d'arrêt (5) étant en contact avec des douilles de siège interchangeables (13, 14) lors de la fermeture du passage (3),
**caractérisé en ce que**:
les brides de raccordement (6, 7) reposent sur les douilles de siège (13, 14) qui s'engagent dans le boîtier (2), et **en ce que** les brides de raccordement (6, 7) sont fixées au boîtier par des boulons filetés (19) qui traversent le boîtier, dans lequel le vissage des brides de raccordement (6, 7) sur le boîtier (2) permet de fixer et de positionner de manière optimale les douilles de siège (13, 14) situées sur les brides de raccordement (6, 7) dans le boîtier (2).

2. Robinet d'arrêt (1) selon l'une des revendications précédentes, **caractérisé en ce que** le passage (3) traverse le boîtier en ligne droite.

3. Robinet d'arrêt (1) selon l'une des revendications précédentes, **caractérisé en ce que** les brides de raccordement (6, 7) sont disposées sur les côtés opposés (11, 12) du boîtier (2).

4. Robinet d'arrêt (1) selon l'une des revendications précédentes, **caractérisé en ce que** les douilles de siège (13, 14) comportent chacune des dispositifs d'étanchéité (15) pour assurer l'étanchéité par rapport aux brides de raccordement (6, 7) et au boîtier (2).

5. Robinet d'arrêt (1) selon l'une des revendications précédentes, **caractérisé en ce que** les brides de raccordement (6, 7) sont moulées d'un seul tenant sur les douilles de siège (13, 14) qui s'engagent dans le boîtier (2).

6. Robinet d'arrêt (1) selon l'une des revendications précédentes, **caractérisé en ce que** les douilles de siège (13, 14) tapissent le passage (3) dans le boîtier (2).

7. Robinet d'arrêt (1) selon l'une des revendications précédentes, **caractérisé en ce que** le tiroir d'arrêt (5) est interchangeable.

8. Robinet d'arrêt (1) selon la revendication 7, **caractérisé en ce que** le tiroir d'arrêt (5) présente une ouverture de passage (16) dont la géométrie peut être modifiée lors du remplacement du tiroir d'arrêt (5).
